# EUROPEAN PATENT SPECIFICATION

(11) **EP 1 503 202 B1**
(45) Date of publication and mention of the grant of the patent: **25.07.2018**
(21) Application number: 04017966.5
(22) Date of filing: 29.07.2004
(51) Int. Cl.: G01N 1/28

(54) **Smear preparing apparatus**
Vorrichtung zur Vorbereitung von Abstrichen
Dispositif pour la préparation d'étalements

(30) Priority: 31.07.2003 JP 2003204711
(43) Date of publication of application: 02.02.2005
(73) Proprietor: SYSMEX CORPORATION, Kobe-shi Hyogo 651-0073 (JP)
(72) Inventor: Nakaya, Masanori, Kobe-shi Hyogo 651-2103 (JP); Watanabe, Toshio, Kobe-shi Hyogo 655-0006 (JP)
(74) Representative: Hoffmann Eitle

(56) References cited:
- EP-A- 1 271 125
- US-A- 5 209 903
- US-A- 5 650 332
- US-A- 5 665 312
- US-A1- 2003 138 355
- US-B1- 6 319 470

## Description

### FIELD OF THE INVETION

The present invention relates to a smear preparing apparatus for preparing a smear of sampled blood, bone-marrow fluid and the like.

### BACKGROUND

Conventionally, in order to observe blood or the like by a microscope or the like, a smear preparing apparatus in which blood or the like is dropped on a slide glass and smeared by a spreader glass (smearing member) to generate a smear is used.

Since each sample has different characteristics such as particle density, viscosity and the like, if the smear is always generated under the same condition, the smear becomes unsuitable for observation in some samples.

Therefore, there is known a smear preparing apparatus in which the smearing condition is set every sample based on a measurement result from a blood analyzer (refer to U.S. Patent No. 5209903).

According to such conventional apparatus, the smearing condition is determined based on a hematocrit value, for example. In addition, since it is known that blood viscosity is increased as a hemoglobin amount is increased in general, it is considered that the smearing condition is set based on the measurement result of the hemoglobin amount.

In addition, although the method of setting the smearing condition by the above conventional apparatus is very effective when the smear is automatically generated, it does not respond to" a case of the special sample or various kinds of user's needs.

For example, although the hematocrit value of a leukemia patient is normal or slightly small, it has been found that the WBC (White Blood Cell) of the leukemia patient is weak and liable to be destroyed.

When a blood smear of such patient is made, it is necessary to make it thicker than the smear made under the smearing condition based on the normal hematocrit value when the blood on the slide glass is smeared by the spreader glass, so as not to destroy the WBC.

In addition, observers who observe the smear by a microscope have different demands for the smear. That is, some observers want to observe thin and spread smear and some observers want to observe the smear thickly collected in a small region.

In US 2003/0138355 A1 there is disclosed a smear preparing apparatus for preparing a smear of a specimen on a glass slide by using a spreader based on a smearing condition, the apparatus including a memory for storing smearing conditions in connection with pertinent information required for establishing the smearing condition; and a controller for retrieving one of the stored smearing conditions corresponding to the pertinent information of the specimen from the memory and for determining it as the smearing condition of the specimen.

In US-A-5 650 332 there is disclosed a method for the preparation of microscope slides including the step of temporarily deforming the normally planar surface of a slide on which the smear is being made, rendering it slightly concave in shape. This step has been found to substantially reduce streaking and other artifacts which interfere with the formation of an uninterrupted, substantially uniform monolayer of blood cells on the slide. Preferably, the movement of a blood-smearing member across the slide is controlled as a function of various predetermined physical parameters of the blood.

In EP-A-1 271 125 there is disclosed an automatic smear preparing apparatus including a sample smearing section for smearing a biological sample on a slide glass by using a spreader glass, a washing section for washing the used spreader glass, and an ultrasonic generating section for applying ultrasound to the washing section.

### SUMMARY

According to one aspect of the present invention there is provided a smear preparing apparatus for preparing a smear of a blood sample on a slide glass, comprising: a smear preparing device for preparing a smear on a slide glass based on a smear preparing condition; and characterized by comprising: an input unit for inputting first smear preparing conditions; a memory for storing the first smear preparing conditions input by the input unit, each of the first smear preparing conditions being in connection with a condition identification data which is associated with a plurality of analysis results of a blood sample other than a hematocrit value, the memory being adapted to further store second smear preparing conditions, each of the second smear preparing conditions being in connection with a respective hematocrit range; an information acceptor for accepting a hematocrit value or a condition identification data; and a controller for retrieving one of the first and second smear preparing conditions from the memory and controlling the smear preparing device so as to prepare a smear based on the retrieved first or second smear preparing condition, wherein the controller retrieves one of the first smear preparing conditions corresponding to a condition identification data from the memory when the condition identification data is accepted by the information acceptor, and retrieves one of the second smear preparing conditions corresponding to a hematocrit range from the memory when a hematocrit value is accepted by the information acceptor.

### BRIEF DESCRIPTION OF THE DRAWINGS

Fig. 1 is a plan view showing a smear preparing system embodying features of the present invention;
Fig. 2 is a perspective view showing sample rack embodying features of the present invention;
Fig. 3 is a block diagram showing the smear preparing apparatus embodying features of the present invention;
Fig. 4 is a view showing a relation between smearing levels and a smearing control condition embodying features of the present invention;
Fig. 5 is a constitution view showing a driving mechanism for a spreader glass embodying features of the present invention;
Fig. 6 is an explanatory view for operations of the driving mechanism for the spreader glass in Fig. 5.
Fig. 7 is an explanatory view for operations of the driving mechanism for the spreader glass in Fig. 5.
Fig. 8 is a block diagram showing a host computer embodying features of the present invention.
Fig. 9 is a view of a screen showing smearing level information embodying features of the present invention.
Fig. 10 is a view of a screen showing smearing level information embodying features of the present invention.
Fig. 11 is a flowchart showing operations of a smear preparing system embodying features of the present invention.
Fig. 12 is a flowchart showing operations of a smear preparing system embodying features of the present invention.
Fig. 13 is an explanatory view showing a setting example of the smearing level information embodying features of the present invention.

### DESCRIPTION OF THE PREFERRED EMBODIMENTS

Hereinafter, an embodiment of a smearing preparing sysytem is described with reference to the drawings.

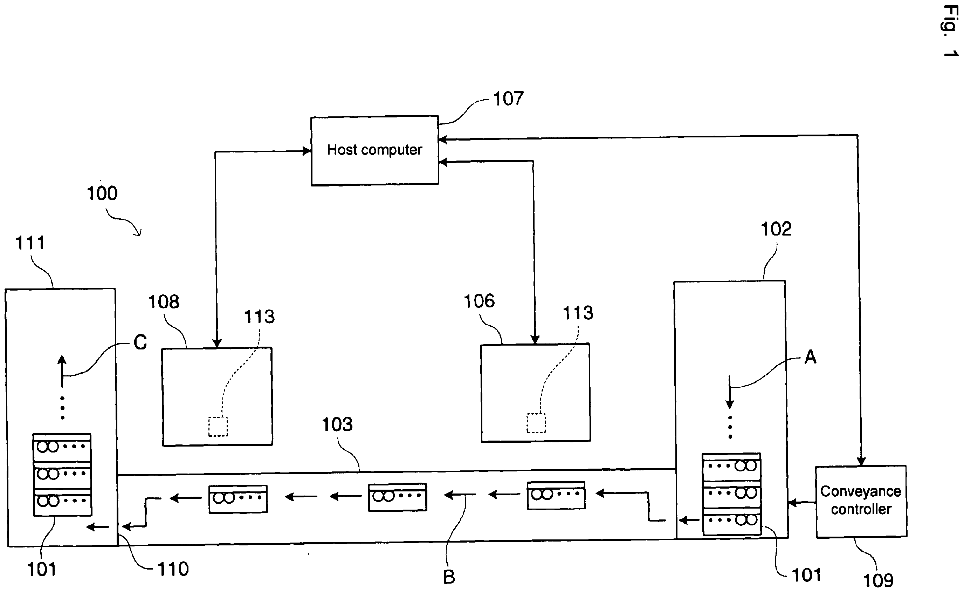

Fig. 1 is a plan view showing a smear preparing system.

As shown in Fig. 1, a system 100 comprises a loader 102, a conveyer 103, and unloader 111, and a blood analyzer 106 and a smear preparing apparatus 108 are arranged along the conveyer 103.

A conveyance controller 109 for controlling the loader 102, the conveyer 103 and the unloader 111 is provided and a host computer 107 which exchanges information or instructs among the blood analyzer 106, the smear preparing apparatus 108 and the conveyance controller 109 or gives instructions to them is provided.

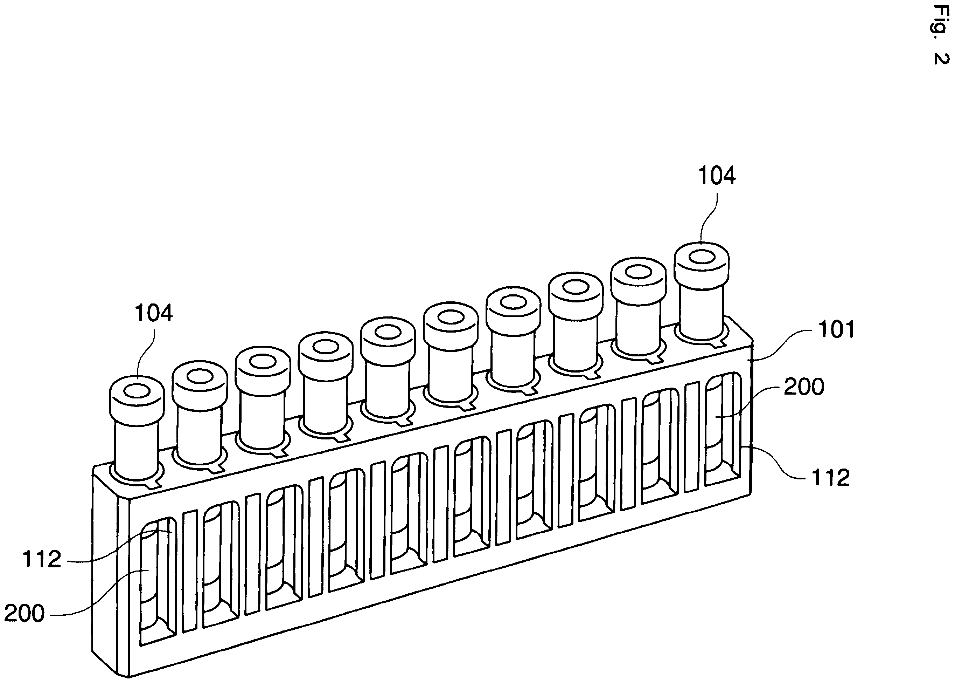

A plurality of sample racks 101 are put on the loader 102. The sample racks 101 are conveyed to a carry-in end of the conveyer 103 adjacent to the loader 102 in the direction shown by an arrow A and then get off the loader 102. As shown in Fig. 2, each sample rack 101 has a plurality of sample containers 104 which contain blood samples.

The sample racks 101 are conveyed by the conveyer 103 in the direction of an arrow B and reach a discharge end 110 of the conveyer 103 through the blood analyzer 106 and the smear preparing apparatus 108. Then, the sample racks 101 are conveyed in the direction of arrow C by the unloader 111 adjacent to the discharge end 110 of the conveyer 103.

In addition, as shown in Fig. 2, a barcode label 200 showing identification information (ID) of the sample is attached on each sample container 104. Windows 112 are provided on the longitudinal side of the sample rack 101 through which the barcode on the sample container 104 is read.

When the sample rack 101 containing the sample containers 104 is put on the loader 102, the system 100 is started. Then, the first sample rack 101 is moved in the direction of the arrow B by the conveyer 103 and stops at the blood analyzer 106.

Here, the barcode of the first sample container 104 is read by a barcode reader 113. The blood analyzer 106 analyzes the sample in the sample container 104 and reports the analyzed result to the host computer 107 together with the barcode information. The blood analyzer 106 repeats the above operations until samples of all sample containers 104 are analyzed. The host computer 107 determines whether it is necessary to prepare the smear for that sample or not based on the analyzed result.

Then, the sample rack 101 having only the samples whose smear no longer needs to be prepared passes through the smear preparing apparatus 108 on the conveyer 103 which is controlled by the conveyance controller 109 based on a command of the host computer and reaches the unloader 111. The sample rack 101 containing the sample whose smear needs to be prepared is moved to reach the smear preparing apparatus 108 by the conveyer 103 which is controlled by the conveyance controller 109 based on the command of the host computer 107. The barcode of each sample container 104 is read by the barcode reader 113 of the smear preparing apparatus 108 and transmitted to the host computer 107. When the host computer 107 determines that the smear needs to be prepared, the smear preparing apparatus 108 takes a sample whose smear needs to be prepared from the sample container 104 and prepares a blood smear for it. Meanwhile, the sample container 104 whose smear no longer needs to be prepared is moved further in the direction of the arrow B and the next sample container 104 reaches the smear preparing apparatus 108.

Then, the sample rack 101 which passed through the smear preparing apparatus 108 on the conveyer 103 reaches the unloader 111.

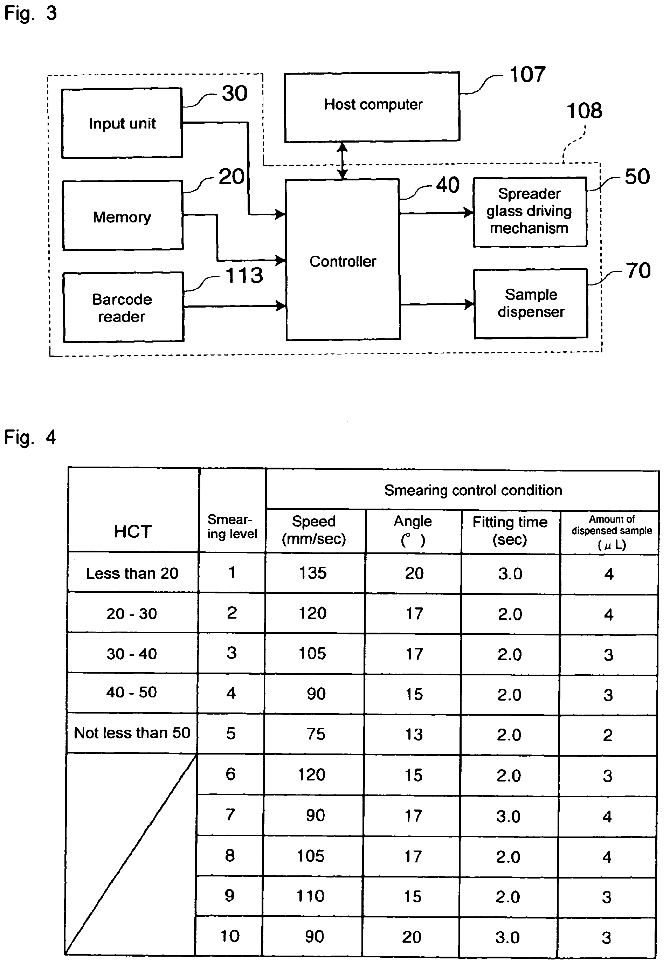

Fig. 3 is a block diagram of the smear preparing apparatus 108. The smear preparing apparatus 108 comprises a memory 20, an input unit 30, a controller 40, a sample dispenser 70, a spreader glass driving mechanism 50 and a barcode reader 113.

The controller 40 comprises a CPU, a ROM and a RAM, and the input unit 30 comprises a keyboard.

Smearing control conditions are set so as to correspond to smearing levels (condition identification data) through the input unit 30 and stored in the memory 20. The smearing control conditions are previously stored before the smearing is actually performed.

Fig. 4 is a table showing relations between the smearing levels and smearing control conditions stored in the memory 40.

As shown in Fig. 4, each of the smearing levels 1 to 10 corresponds to the smearing control conditions such as a speed (movement speed of a spreader glass), an angle (which is formed between the spreader glass and a slide glass), a fitting time (after the spreader glass comes in contact with sample dispensed on the slide glass until the spreader glass starts to move) and the like. In addition, the smearing control condition may comprise smearing starting position on the slide glass and the like.

As shown in Fig 4, referring to the smearing levels 1 to 5, default values are previously set for the corresponding smearing control conditions and a range of HCT (Hematocrit value) corresponds to each of the levels. The default values are also set for the ranges of HCT. The relation between the HCT and the smearing level is used when the host computer 107 does not designate the smearing level to the controller 40 as will be described below. Referring to the smearing levels 6 to 10, the corresponding smearing control conditions are arbitrarily set by a user. In addition, according to the smearing levels 1 to 5, the corresponding smearing control conditions and the HCT ranges may be arbitrarily set by the user.

The controller 40 reads the corresponding smearing control conditions from the memory 20 when the host computer 107 designates the smearing level, and controls the spreader glass driving mechanism 50 and the sample dispenser 70 based on the read smearing control conditions (a speed, an angle, a fitting time and a dispensed amount) to prepare the smear.

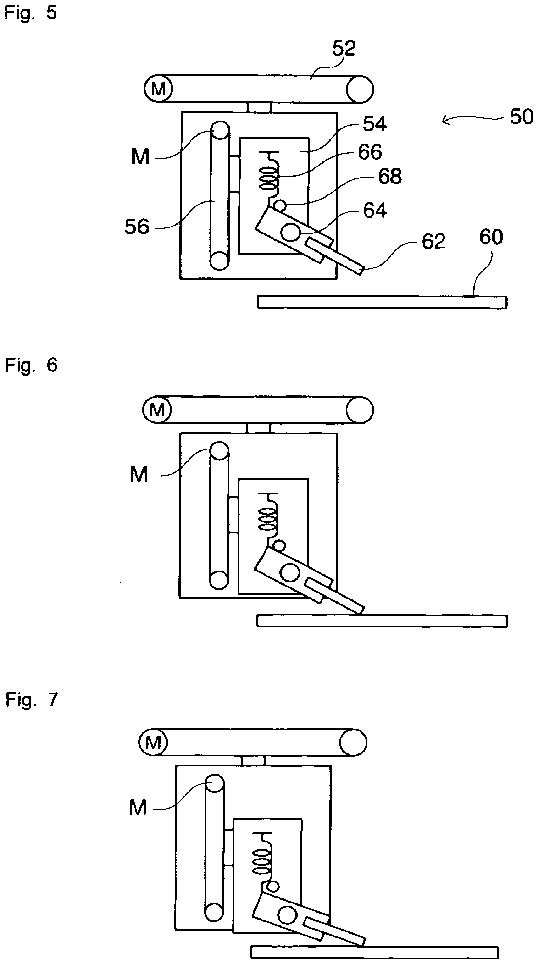

Fig. 5 is a view showing a schematic constitution of the spreader glass driving mechanism 50 in the smear preparing apparatus 108. The spreader glass driving mechanism 50 comprises a back-and-forth driving mechanism 52 which moves the spreader glass 62 parallel to the surface of the slide glass 60, a vertical driving mechanism 56 which elevates the spreader glass to and from the slide glass 60, and an angle retaining mechanism 54 which retains the angle formed between the spreader glass 62 and the slide glass 60. The back-and-forth driving mechanism 52 and the vertical driving mechanism 56 are provided for moving the spreader glass 62 back and forth, and up and down, and each comprises a belt-motor mechanism provided with a motor M and a belt.

According to the back-and-forth driving mechanism 52, a moving speed of the spreader glass 62 can be adjusted by a rotation speed of the belt motor.

In addition, the angle retaining mechanism 54 comprises an elastic member 66 which pulls the spreader glass 62 so as to be rotated around a spindle 64, and a stopper 68 which fixes a limit of rotation, in which after an end of the spreader glass comes in contact with the slide glass 60, it is further lowered so that the angle formed with the slide glass 60 is changed.

Fig. 6 is a view showing a state in which the angle between the spreader glass 62 and the slide glass 60 is retained large by the angle retaining mechanism 54 and Fig. 7 is a view showing a state in which the angle is retained small. The angle formed between the spreader glass 62 and the slide glass 6 is adjusted by an expansion state of the elastic member 66.

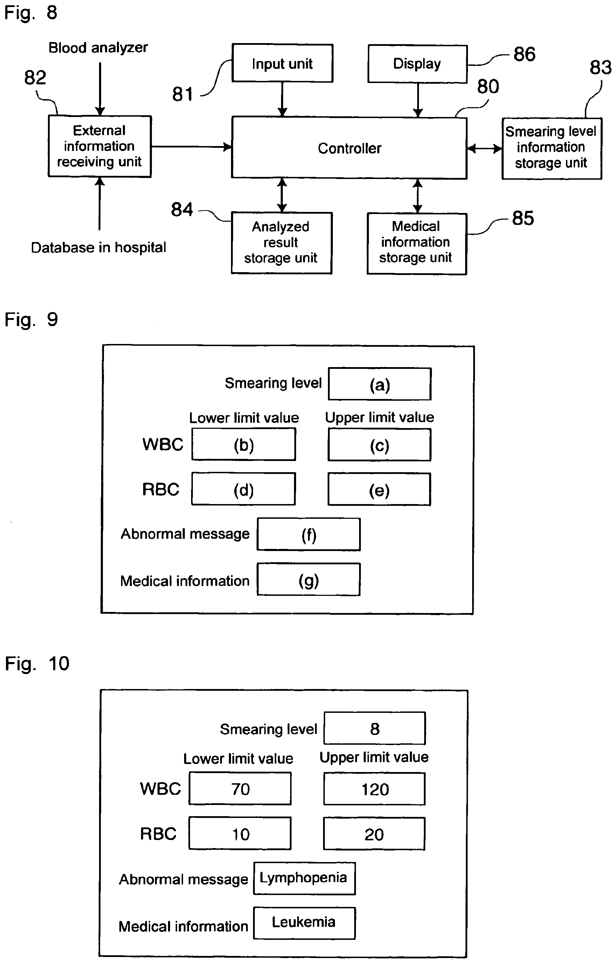

Fig. 8 is a block diagram showing the host computer 107. A controller 80 stores information set related with the smearing levels through an input unit 81, in a smearing level information storage unit 83 and receives the analyzed result from the blood analyzer 106 (Fig. 1) through an external information receiving unit 82 and stores it in an analyzed result storage unit 84 together with barcode (ID) information.

The controller 80 further receives medical information and ID information of sample donors from an external terminal (not shown) through the external information receiving unit 82 and stores them in a medical information storage unit 85. A display 86 displays items or contents set and input from the input unit 81 by the user.

The controller 80 comprises a CPU, a ROM, and a RAM. The input unit 81 comprises a keyboard, the display 86 comprises an LCD, the external information receiving unit 82 comprises an I/O port, and each of the storage units 83 to 85 comprises a RAM.

Fig. 9 shows an example of a screen displayed in the display 86 when the user sets the smearing level information from the input unit 81.

Referring to Fig. 9, any one of smearing levels 1 to 10 (Fig. 4) is previously set in column (a), an upper limit value and a lower limit value of WBC (White Blood Cell) count are previously set in columns (b) and (c), an upper limit value and a lower limit value of RBC (Red Blood Cell) count are previously set in columns (d) and (e), and an abnormal message and medical information are previously set in columns (f) and (g).

In addition, the abnormal message comprises "WBC abnomal", "neutropenia", "neutrophilia", "lymphopenia", "lymphocytosis", "RBC abnormal", "anemia", "RBC agglutination", "HGB defect", "PLT abnormal" and the like which are expected to be transmitted with numeric values of analytical item to the host computer 107 from the blood analyzer 106, and one or more of them are selected and set in the column (f).

In addition, the medical information comprises personal information (age, gender, history of disease, name of in-patients ward) and diagnostic information (name of disease, disease state, examination items) of the expected sample donor (patient), one or more of them are selected and set in the column (g).

Fig. 10 shows an example of a screen in which the setting is completed. In addition, a column in which the setting is not performed is left blank.

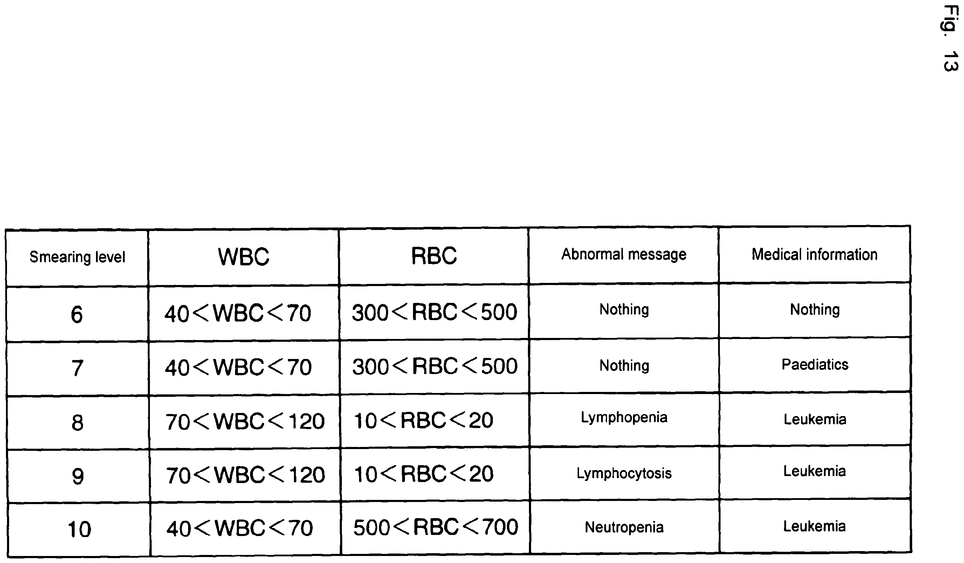

Fig. 13 shows a table formed by setting the smearing level information through the user in Fig. 9, which is stored in the smearing level information storage unit 83.

When the host computer 107 receives the barcode information (ID) from the smear preparing apparatus 108, searches the analyzed result and the medical information which correspond to the ID information from the storage units 84 and 85 and when there is a corresponding one in the table shown in Fig. 13, indicates the corresponding smearing level to the smear preparing apparatus 108. If there is not corresponding one, the HCT value is transmitted to the smear preparing apparatus 108 from the analyzed result corresponding to the ID information.

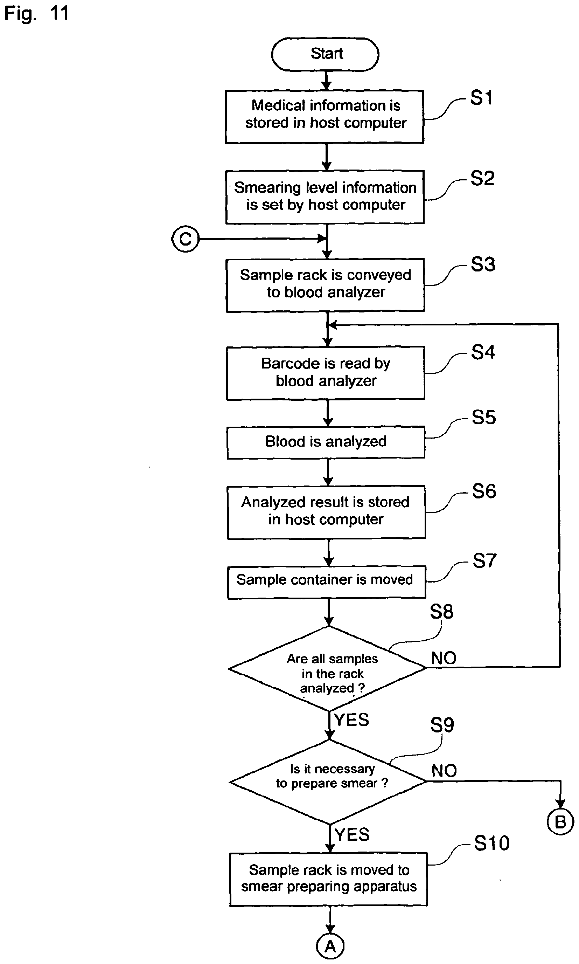

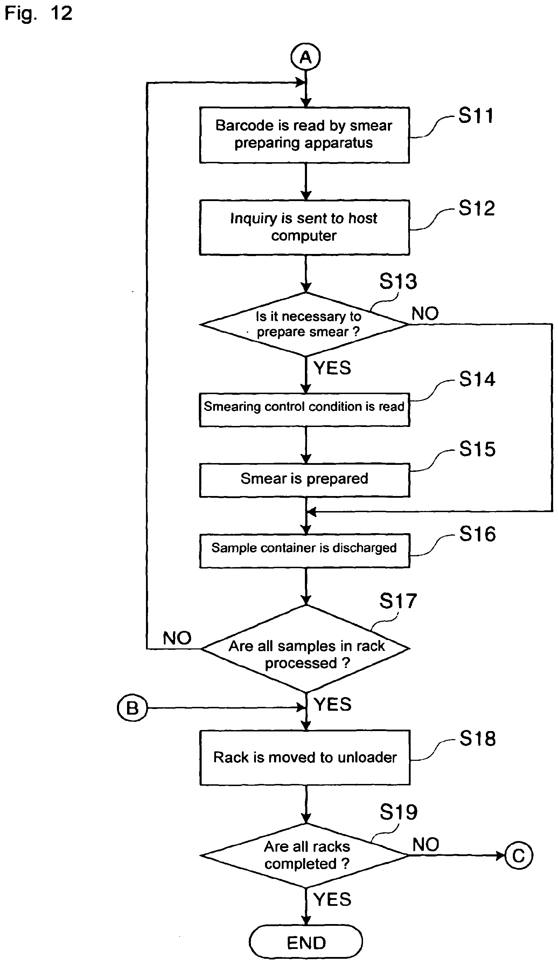

A series of operations of the smear preparing system 100 is described with reference to flowcharts in Figs. 11 and 12.

Referring to Fig. 11, the medical information of the sample donor (patient) is transmitted to the host computer 107 from a database in a hospital, for example and stored therein at step S1.

Then, the smearing level information is set by the host computer 107 as shown in Figs. 9 and 10 at step S2. Sample containers 104 (Fig. 2) having the samples are mounted on the sample rack 101 and set on the loader 102.

When the system 100 is started, the loader 102 and the conveyer 103 are driven by the conveyance controller 109 and the sample rack 101 is conveyed to the blood analyzer 106 at step S3. The barcode of the first sample container 104 is read and the sample is extracted from the sample container 104 and analyzed at step S5. The analyzed result (analyzed numeric value of each item and the abnormal message determined from the numeric value) is transmitted to the host computer 107 at step S6. The analyzed sample container 104 is moved by a predetermined distance (an arrangement pitch of the containers 104) at step S7. When there is any unanalyzed sample container 104 in the sample rack 101 at step S8, the operation returns to step S4 and the barcode of the unanalyzed sample container 104 is read by the blood analyzer 106. When all samples are analyzed at step S8, the operation proceeds to step S9. When the smear does not need to be generated from any of the samples in the sample rack 101 at step S9, the sample rack 101 is conveyed to the unloader 111. When it is necessary toprepare the smear at step S9, the analyzed sample rack 101 is conveyed to the smear preparing apparatus 108 at step S10.

Then, as shown in Fig. 12, the barcode of the first sample container 104 is read in the smear preparing apparatus 108 at step S11. The smear preparing apparatus 108 inquires of the host computer 107 about the sample of the barcode at step S12. When the host computer 107 determines that it is necessary to prepare the smear, it indicates the smearing level when the smearing level is designated, or indicates the HCT value when the smearing level is not designated, to the smear preparing apparatus 108, and the controller 40 of the smear preparing apparatus 108 reads the smearing control conditions corresponding to the smearing level or the HCT value from the memory 20 at steps S13 and S14. As shown in Fig. 4, the table in which the relations between the smearing levels, the HCT values, and the smearing control conditions are previously set is stored in the memory 20 and the controller 40 reads the smearing control conditions from the memory 20 based on the table. The case where it is necessary to generate the smear is a case where the analyzed result of the sample by the blood analyzer 106 contains the abnormal message, for example. The smear is prepared according to the read smearing control conditions at step S15.

Then, the sample container 104 whose smear is made is moved by the predetermined distance (arrangement pitch of the containers 104) at step S16 and when all samples in the sample rack 101 are processed, the sample rack 101 is moved to the unloader 111 at steps S17 and S18. In step S17, when there is any unprocessed sample container 104, the operation returns to step S11 and its barcode is read in the smear preparing apparatus 108 . In addition, when it is determined that it is not necessary to make the smear at step S13, the sample container 104 is moved by the predetermined distance at step S16. The case where it is not necessary to make the smear is a case where the analyzed result of the sample by the blood analyzer 106 does not contain the abnormal message, for example.

When all of the sample racks are not processed yet at step S19, the operation proceeds to step S3.

As the smearing control condition, at least one selected from a dispensed amount of the sample to the slide glass, an angle of the smearing member to the slide glass, a moving speed of the smearing member to the slide glass, a fitting time of the sample to the smearing member, and smearing starting position to the slide glass can be used.

## Claims

1. A smear preparing apparatus for preparing a smear of a blood sample on a slide glass, comprising:
a smear preparing device (50, 108) for preparing a smear on a slide glass based on a smear preparing condition;
an input unit (30, 81) for inputting first smear preparing conditions;
a memory (20, 83-85) for storing the first smear preparing conditions input by the input unit, each of the first smear preparing conditions being in connection with a condition identification data which is associated with a plurality of analysis results of a blood sample other than a hematocrit value, the memory being adapted to further store second smear preparing conditions, each of the second smear preparing conditions being in connection with a respective hematocrit range;
an information acceptor (40) for accepting a hematocrit value or a condition identification data; and
a controller (40) for retrieving one of the first and second smear preparing conditions from the memory and controlling the smear preparing device so as to prepare a smear based on the retrieved first or second smear preparing condition,
wherein the controller retrieves one of the first smear preparing conditions corresponding to a condition identification data from the memory when the condition identification data is accepted by the information acceptor, and retrieves one of the second smear preparing conditions corresponding to a hematocrit range from the memory when a hematocrit value is accepted by the information acceptor.

2. The smear preparing apparatus of claim 1, wherein the information acceptor (82) accepts the hematocrit value or the condition identification data via a network.

3. The smear preparing apparatus of claim 2, wherein the information acceptor (82) accepts the hematocrit value or the condition identification data from a computer (107) connected to a sample analyzer (106).

4. The smear preparing apparatus of claim 3, wherein the condition identification data is stored in the computer (107) in connection with a sample attribute information.

5. The smear preparing apparatus of claim 4, wherein the sample attribute information is at least one selected from a sample analysis data range, an abnormal message, and medical information.

6. The smear preparing apparatus of claim 5, wherein the sample analysis data range includes red blood cell range and white blood cell range.

7. The smear preparing apparatus of any one of claims 1 to 6, wherein the input unit further inputs the second smear preparing conditions.

## Patentansprüche

1. Abstrich-Herstellungsvorrichtung zum Herstellen eines Abstrichs einer Blutprobe auf einem Objektträger, umfassend:
eine Abstrich-Herstellungsvorrichtung (50, 108) zum Herstellen eines Abstrichs auf einem Objektträger basierend auf einer Abstrich-Herstellungsbedingung;
eine Eingabeeinheit (30, 81) zum Eingeben erster Abstrich-Herstellungsbedingungen;
einen Speicher (20, 83-85) zum Speichern der von der Eingabeeinheit eingegebenen ersten Abstrich-Herstellungsbedingungen, wobei jede der ersten Abstrich-Herstellungsbedingungen mit Identifikationsdaten der Bedingung, die mit einer Vielzahl von Analyseergebnissen einer Blutprobe assoziiert sind, die keine Hämatokritwerte sind, in Verbindung steht, wobei der Speicher ferner derart angepasst ist, um zweite Abstrich-Herstellungsbedingungen zu speichern, wobei jede der zweiten Abstrich-Herstellungsbedingungen in Verbindung mit einem entsprechenden Hämatokritbereich steht;
einen Informationsakzeptor (40) zum Akzeptieren eines Hämatokritwerts oder von Identifikationsdaten einer Bedingung; und
eine Steuerung (40) zum Abruf der ersten und zweiten Abstrich-Herstellungsbedingungen aus dem Speicher und zum Steuern der Abstrich-Herstellungsvorrichtung, um einen Abstrich basierend auf der abgerufenen ersten oder zweiten Abstrich-Herstellungsbedingung herzustellen,
wobei die Steuerung eine der ersten Abstrich-Herstellungsbedingungen entsprechend den Identifikationsdaten der Bedingung aus dem Speicher abruft, wenn die Identifikationsdaten der Bedingung von dem Informationsakzeptor akzeptiert worden sind, und eine der zweiten Abstrich-Herstellungsbedingungen entsprechend eines Hämatokritbereichs aus dem Speicher abruft, wenn ein Hämatokritwert von dem Informationsakzeptor akzeptiert worden ist.

2. Abstrich-Herstellungsvorrichtung nach Anspruch 1, wobei der Informationsakzeptor (82) den Hämatokritwert oder die Identifikationsdaten der Bedingung über ein Netzwerk akzeptiert.

3. Abstrich-Herstellungsvorrichtung nach Anspruch 2, wobei der Informationsakzeptor (82) den Hämatokritwert oder die Identifikationsdaten der Bedingung von einem Computer (107) akzeptiert, der an ein Probenanalysegerät (106) angeschlossen ist.

4. Abstrich-Herstellungsvorrichtung nach Anspruch 3, wobei die Identifikationsdaten der Bedingung in Verbindung mit Attributinformationen der Probe in dem Computer (107) gespeichert sind.

5. Abstrich-Herstellungsvorrichtung nach Anspruch 4, wobei die Attributinformationen der Probe aus zumindest einem Datenbereich der Probenanalyse, einer abnormalen Nachricht und medizinischen Informationen ausgewählt sind.

6. Abstrich-Herstellungsvorrichtung nach Anspruch 5, wobei der Datenbereich der Probenanalyse einen Bereich von roten Blutzellen und einen Bereich von weißen Blutzellen beinhaltet.

7. Abstrich-Herstellungsvorrichtung nach einem der Ansprüche 1 bis 6, wobei die Eingabeeinheit ferner die zweiten Abstrich-Herstellungsbedingungen eingibt.

## Revendications

1. Appareil de préparation de prélèvement pour préparer un prélèvement d'un échantillon sanguin sur une lamelle de verre, comprenant :
un dispositif de préparation de prélèvement (50, 108) pour préparer un prélèvement sur une lamelle de verre sur la base d'une condition de préparation de prélèvement ;
une unité d'entrée (30, 81) pour entrer des premières conditions de préparation de prélèvement ;
une mémoire (20, 83-85) pour mémoriser les premières conditions de préparation de prélèvement entrées par l'unité d'entrée, chacune des premières conditions de préparation de prélèvement étant en relation avec une donnée d'identification de condition qui est associée à une pluralité de résultats d'analyses d'un échantillon sanguin autre qu'une valeur d'hématocrite, la mémoire étant apte à mémoriser en outre des deuxièmes conditions de préparation de prélèvement, chacune des deuxièmes conditions de préparation de prélèvement étant en relation avec une plage d'hématocrite respective ;
un accepteur d'informations (40) pour accepter une valeur d'hématocrite ou une donnée d'identification de condition ; et
un dispositif de commande (40) pour récupérer l'une des premières et deuxièmes conditions de préparation de prélèvement de la mémoire et commander le dispositif de préparation de prélèvement de manière à préparer un prélèvement sur la base de la première ou deuxième condition de préparation de prélèvement récupérée,
dans lequel le dispositif de commande récupère l'une des premières conditions de préparation de prélèvement correspondant à une donnée d'identification de condition de la mémoire lorsque la donnée d'identification de condition est acceptée par l'accepteur d'informations, et récupère l'une des deuxièmes conditions de préparation de prélèvement correspondant à une plage d'hématocrite de la mémoire lorsqu'une valeur d'hématocrite est acceptée par l'accepteur d'informations.

2. Appareil de préparation de prélèvement selon la revendication 1, dans lequel l'accepteur d'informations (82) accepte la valeur d'hématocrite ou la donnée d'identification de condition par l'intermédiaire d'un réseau.

3. Appareil de préparation de prélèvement selon la revendication 2, dans lequel l'accepteur d'informations (82) accepte la valeur d'hématocrite ou la donnée d'identification de condition provenant d'un ordinateur (107) relié à un analyseur d'échantillon (106).

4. Appareil de préparation de prélèvement selon la revendication 3, dans lequel la donnée d'identification de condition est mémorisée dans l'ordinateur (107) en relation avec une information d'attribut d'échantillon.

5. Appareil de préparation de prélèvement selon la revendication 4, dans lequel l'information d'attribut d'échantillon est au moins l'une sélectionnée parmi une plage de données d'analyse d'échantillon, un message anormal et une information médicale.

6. Appareil de préparation de prélèvement selon la revendication 5, dans lequel la plage de données d'analyse d'échantillon comprend une plage de globules rouges et une plage de globules blancs.

7. Appareil de préparation de prélèvement selon l'une quelconque des revendications 1 à 6, dans lequel l'unité d'entrée entre en outre les deuxièmes conditions de préparation de prélèvement.
